(19) Europäisches Patentamt / European Patent Office / Office européen des brevets

(11) **EP 4 760 754 A1**

(12) **EUROPEAN PATENT APPLICATION**
published in accordance with Art. 153(4) EPC

(43) Date of publication:
**17.06.2026 Bulletin 2026/25**

(21) Application number: **24915829.6**

(22) Date of filing: **10.10.2024**

(51) International Patent Classification (IPC):
*H01B 9/02* (2006.01)    *H01B 5/08* (2006.01)
*H01B 1/02* (2006.01)    *H01B 7/30* (2006.01)
*H01B 9/00* (2006.01)    *H02G 1/14* (2006.01)

(52) Cooperative Patent Classification (CPC):
H01B 5/08; H01B 1/023; H01B 1/026; H01B 7/30;
H01B 9/006; H02G 1/14

(86) International application number:
**PCT/JP2024/036260**

(87) International publication number:
**WO 2026/078843 (16.04.2026 Gazette 2026/16)**

(84) Designated Contracting States:
**AL AT BE BG CH CY CZ DE DK EE ES FI FR GB
GR HR HU IE IS IT LI LT LU MC ME MK MT NL
NO PL PT RO RS SE SI SK SM TR**
Designated Extension States:
**BA**
Designated Validation States:
**GE KH MA MD TN**

(71) Applicant: **Sumitomo Electric Industries, Ltd.
Osaka-shi, Osaka 541-0041 (JP)**

(72) Inventors:
• **NISHIMURA Takashi
Osaka-shi, Osaka 541-0041 (JP)**

• **MASHIO Shoji
Osaka-shi, Osaka 541-0041 (JP)**
• **MINAMINO Tadahiko
Osaka-shi, Osaka 541-0041 (JP)**
• **FUJII Noritaka
Osaka-shi, Osaka 541-0041 (JP)**

(74) Representative: **Grünecker Patent- und
Rechtsanwälte
PartG mbB
Leopoldstraße 4
80802 München (DE)**

(54) **POWER CABLE, CONDUCTOR, CABLE CONNECTION STRUCTURE, AND CABLE TERMINAL CONNECTION STRUCTURE**

(57)    A power cable including a conductor including a copper wire containing copper or a copper alloy and an aluminum wire containing aluminum or an aluminum alloy, wherein at least a portion of the copper wire and at least a portion of the aluminum wire are in contact with each other.

[FIG. 1A]

EP 4 760 754 A1

**Description**

**[Technical Field]**

The present disclosure relates to a power cable, a conductor, a cable connection structure, and a cable termination connection structure.

**[Background Art]**

In recent years, conductors in which aluminum wires are adopted in place of copper wires are used in some cases (for example, Patent Literature 1).

**[Citation List]**

**[Patent Literature]**

Patent Literature 1: Japanese Unexamined Patent Application Publication No. 2014-128135

**[Summary of Invention]**

According to one aspect of the present disclosure, there is provided a power cable including a conductor including a copper wire including copper or a copper alloy and an aluminum wire including aluminum or an aluminum alloy, wherein at least a portion of the copper wire and at least a portion of the aluminum wire are in contact with each other.

**[Brief Description of Drawings]**

[FIG. 1A] FIG. 1A is a schematic cross-sectional view perpendicular to the axial direction of a first example of a power cable according to a first embodiment of the present disclosure.

[FIG. 1B] FIG. 1B is a schematic cross-sectional view perpendicular to the axial direction of a second example of the power cable according to the first embodiment of the present disclosure.

[FIG. 2] FIG. 2 is a schematic cross-sectional view along the axial direction of a conductor illustrating a cable connection structure according to the first embodiment of the present disclosure.

[FIG. 3] FIG. 3 is a schematic cross-sectional view along the axial direction of a conductor illustrating a cable connection structure according to a modification 1 of the first embodiment of the present disclosure.

[FIG. 4] FIG. 4 is a schematic cross-sectional view along the axial direction of a conductor illustrating a cable termination connection structure according to a modification 2 of the first embodiment of the present disclosure.

[FIG. 5A] FIG. 5A is a schematic cross-sectional view perpendicular to the axial direction of a conductor of a power cable according to a second embodiment of the present disclosure.

[FIG. 5B] FIG. 5B is a schematic cross-sectional view illustrating a state before the segment of FIG. 5A is compression molded.

[FIG. 6A] FIG. 6A is a schematic cross-sectional view perpendicular to the axial direction of a conductor of a power cable according to a third embodiment of the present disclosure.

[FIG. 6B] FIG. 6B is a schematic cross-sectional view illustrating the state before compression molding of the segment of FIG. 6A.

[FIG. 7] FIG. 7 is a schematic cross-sectional view perpendicular to the axial direction of a conductor of a power cable according to a fourth embodiment of the present disclosure.

[FIG. 8] FIG. 8 is a schematic cross-sectional view perpendicular to the axial direction of a conductor of a power cable according to a fifth embodiment of the present disclosure.

[FIG. 9] FIG. 9 is a schematic cross-sectional view perpendicular to the axial direction of a conductor of a power cable according to a sixth embodiment of the present disclosure.

[FIG. 10] FIG. 10 is a schematic cross-sectional view perpendicular to the axial direction of a conductor of a power cable according to a seventh embodiment of the present disclosure.

**[Description of Embodiments]**

[Problem to be Solved by the Disclosure]

An objective of the present disclosure is to improve various properties of a power cable containing an aluminum wire.

[Advantageous Effect of the Disclosure]

According to the present disclosure, various properties of a power cable containing an aluminum wire can be improved.

[Description of the Embodiments of the Disclosure]

<Findings by the Inventors>

First, the findings of the inventors will be explained.
In a power cable, a conductor may include not only a copper wire as in conventional cases, but also an aluminum wire, as described above.
The following problems arise respectively in the case where the conductor contains only the copper wire and in the case where the conductor contains only the aluminum wire.

(Conductor containing only copper wire)

In a conductor containing only a copper wire, an insulating oxide film is not formed around the outer periphery of the copper wire, so the power cable can be easily and stably connected by compressing the ends of a pair of conductors with a sleeve at a specified pressure.
However, in a conductor that contains only a bare copper wire without an insulating film, as the cross-sectional area increases, a skin effect due to alternating current (AC) occurs, increasing the AC resistance, and this reduces the power transmission efficiency.
Therefore, in conductors that only contain copper wires, the skin effect has been suppressed by using a divided conductor that is divided into multiple segments with insulating paper between them, or by using a conductor with an insulated wire in which the outer periphery of each copper wire is covered with an insulating film. However, in these cases, costs such as processing costs and connection construction costs tend to increase.

(Conductor only containing only aluminum wire)

The resistivity of an aluminum wire is higher than that of a copper wire. Therefore, in order to make the resistance of a conductor containing only an aluminum wire equivalent to the resistance of a conductor containing only a copper wire, the size (cross-sectional area) of the conductor had to be increased.
The tensile properties (tensile strength) of an aluminum wire are inferior to those of a copper wire. For this reason, the mechanical strength of a conductor containing only an aluminum wire tends to be lower than that of a conductor containing only a copper wire.
On the other hand, in a conductor that contains only an aluminum wire, an insulating oxide film (native oxide film) is formed around each aluminum wire, which suppresses the skin effect in a manner similar to that of the conductor with an insulated wire described above.
However, in a conductor containing only an aluminum wire, it is difficult to connect a power cable due to the presence of an oxide film on the outer periphery of the aluminum wire.
For example, if the conductor containing only an aluminum wire is not strongly compressed with the sleeve, the oxide film cannot be broken and the connection resistance cannot be reduced. When the sleeve is strongly compressed in this way, the aluminum wire inside the sleeve is easily broken.

Meanwhile, in order to obtain the desired connection resistance without excessively compressing the sleeve, it was necessary to increase the compression length of the sleeve. For example, in the case of an overhead transmission line containing only an aluminum wire (cross-sectional area 2020 mm²), the compression length of the sleeve was required to be as long as 300 to 400 mm. The compression length of the sleeve was too long for a connection structure for a power cable laid underground. Therefore, it was difficult to adopt an ordinary sleeve compression method for the cable connection structure.

For this reason, the method of welding individual aluminum wires between a pair of conductors has been adopted up until now, but the welding work requires special skills, which results in longer work times and higher costs.

Other methods of connecting aluminum wires, such as removing the oxide film from each aluminum wire when connecting the cable by explosive welding, have been considered, but the process of connecting conductors that include aluminum wires can be complicated or difficult, and the connection resistance can be unstable.

(Studies conducted by the present inventors)

As a result of extensive studies, the inventors have found a configuration that solves the above-described problems and improves various properties of the power cable by configuring the conductor to include both copper wires and aluminum wires and optimizing the arrangement of the copper wires and aluminum wires.

The present disclosure is based on the above findings by the inventors.

<Embodiments of the Present Disclosure>

Next, embodiments of the present disclosure will be described.

[1] A power cable according to an aspect of the present disclosure includes

a conductor including a copper wire containing copper or a copper alloy and an aluminum wire containing aluminum or an aluminum alloy, wherein
at least a portion of the copper wire and at least a portion of the aluminum wire are in contact with each other.
This configuration can improve various properties of the power cable including the aluminum wire.

[2] In the power cable described above in [1],
the copper wire and the aluminum wire are arranged alternately in at least a portion of the conductor.
With this configuration, even when the conductor includes the copper wire as a bare wire, the skin effect can be suppressed.

[3] In the power cable described above in [1] or [2],

the conductor includes a plurality of wire layers including at least one from among the copper wire and the aluminum wire, and
each of the copper wire and the aluminum wire is provided in at least two of the wire layers.
According to this configuration, the resistance and mechanical strength required for the conductor can be obtained, the weight of the power cable can be reduced, and the manufacturing cost of the power cable can be reduced.

[4] In the power cable described above in any one of [1] to [3],
a proportion of the number of the copper wire in an outermost periphery of the conductor is 20 % or more of the total number of the copper wire plus the aluminum wire in the outermost periphery of the conductor.
With this configuration, the copper wire on the conductor's outermost periphery breaks the aluminum oxide film on the aluminum wire on the inner side.

[5] In the power cable described above in [4],
the outermost periphery of the conductor includes the aluminum wire, and the number of this aluminum wire is at least one.
With this configuration, the presence of at least one aluminum wire can suppress direct contact between the copper wires in the outermost periphery of the conductor.

[6] In the power cable described above in any one of [1] to [3],

the conductor includes a plurality of segments including the copper wire and the aluminum wire,
each of the segments includes a circular arc region that constitutes an outermost periphery of the conductor, and
in the circular arc region of each of the segments, a proportion of the number of the copper wire is 20 % or more of the total number of the copper wire plus the aluminum wire in that circular arc region.
With this configuration, the copper wire in the outermost periphery of the segment breaks the aluminum oxide film on the aluminum wire on the inner side.

[7] In the power cable described above in [6],
the circular arc region of each of the segments includes the aluminum wire, and the number of this aluminum wire is at least one.
With this configuration, the presence of at least one aluminum wire can suppress direct contact between the copper wires in the outermost periphery of the segment.
[8] In the power cable described above in any one of [1] to [4],

the conductor includes
a copper wire layer including only the copper wire, and
an aluminum wire layer including only the aluminum wire, and
the copper wire layer and the aluminum wire layer are alternately arranged in a radial direction of the conductor.
This configuration can reduce eddy currents that cross between the wire layers in an AC, and is also suitable for a direct current (DC).

[9] In the power cable described above in any one of [1] to [3] and [6],

the conductor includes a plurality of segments including the copper wire and the aluminum wire,
each of the segments includes
a copper wire layer including only the copper wire and
an aluminum wire layer including only the aluminum wire, and
the copper wire layer and the aluminum wire layer are alternately arranged in a radial direction of each of the segments.
This configuration can reduce eddy currents that cross between the wire layers in an AC, and is also suitable for a DC.

[10] In the power cable described above in any one of [1] to [7],

a plurality of the copper wires are provided,
a plurality of the aluminum wires are provided, and
the copper wires and the aluminum wires are arranged in a spotted pattern.
According to this configuration, the skin effect can be stably suppressed.

[11] In the power cable described above in any one of [1] to [3], [6], and [7],

the conductor includes a plurality of segments including the copper wire and the aluminum wire,
each of the segments includes
an aluminum wire layer including only the aluminum wire and not the copper wire, and
a composite wire layer including the copper wire and the aluminum wire, and
the aluminum wire layer and the composite wire layer are alternately arranged in a radial direction of each of the segments.
According to this configuration, the skin effect can be stably suppressed.

[12] In the power cable described above in any one of [1] to [3], [6], and [7],

the conductor includes a plurality of composite wire layers including the copper wire and the aluminum wire, and
in each of the composite wire layers, a single one of the copper wire and a set constituted by two or more of the aluminum wires provided consecutively are alternately arranged in a circumferential direction of each of the composite wire layers.
According to this configuration, the skin effect can be stably suppressed, and the number of aluminum wires can be increased.

[13] In the power cable described above in [11] or [12],

a plurality of the copper wires are provided,
a plurality of the aluminum wires are provided, and
the copper wires are arranged in a spotted pattern not to contact each other.
According to this configuration, the skin effect can be stably suppressed.

[14] In the power cable described above in any one of [1] to [3], [6], [7], and [11] to [13],

the conductor includes a plurality of segments including the copper wire and the aluminum wire, and
from among the copper wire and the aluminum wire, only the aluminum wire is disposed at a location where each one of the segments contacts another one of the segments.
According to this configuration, the segments can be insulated from each other without providing insulating paper between the segments.

[15] In the power cable described above in any one of [1] to [14],
the aluminum wire includes an aluminum native oxide film on the outer periphery.
According to this configuration, no special processing is required to form an oxide film on the aluminum wire.
[16] In the power cable described above in [15],

at a connection portion between the conductor and another conductor, the native oxide film of the aluminum wire is broken by the copper wire, and
at a non-connection portion between the conductor and another conductor, the native oxide film of the aluminum wire is not broken.
This configuration makes it feasible to achieve both a stable connection of the power cable and suppression of the skin effect in AC.

[17] A conductor according to another aspect of the present disclosure is used for the power cable described above in any one of [1] to [16].
This configuration can improve various properties of the power cable including the aluminum wire.
[18] A cable connection structure according to another aspect of the present disclosure includes

a first power cable having a first conductor,
a second power cable having a second conductor, and
a sleeve being tubular and connecting the first conductor and the second conductor, wherein
at least the first conductor includes a copper wire containing copper or a copper alloy and an aluminum wire containing aluminum or an aluminum alloy, and
within the first conductor, at least a portion of the copper wire and at least a portion of the aluminum wire are in contact with each other.
This configuration can improve various properties of the power cable including the aluminum wire.

[19] A cable termination connection structure according to another aspect of the present disclosure includes

a power cable including a conductor,
a sleeve being tubular and surrounding a tip of the conductor of the power cable, and
a porcelain tube into which the power cable to which the sleeve is attached is inserted, wherein
the conductor includes a copper wire containing copper or a copper alloy, and an aluminum wire containing aluminum or an aluminum alloy, and
at least a portion of the copper wire and at least a portion of the aluminum wire are in contact with each other.
This configuration can improve various properties of the power cable including the aluminum wire.

[Details of the Embodiments of the Present Disclosure]

Next, one embodiment of the present disclosure will be described below with reference to the drawings. Note that the present disclosure is not limited to these examples, but is defined by the claims, and is intended to encompass all modifications within the meaning and scope of the claims.

<First Embodiment of the Present disclosure>

(1) Power cable and conductor

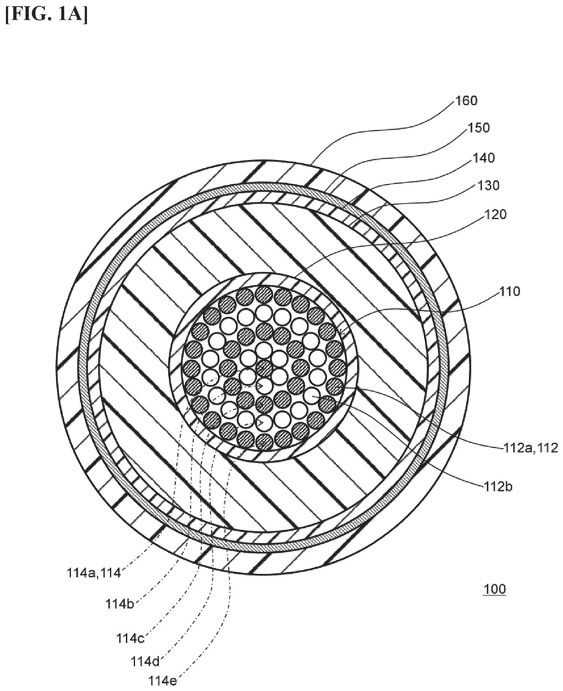

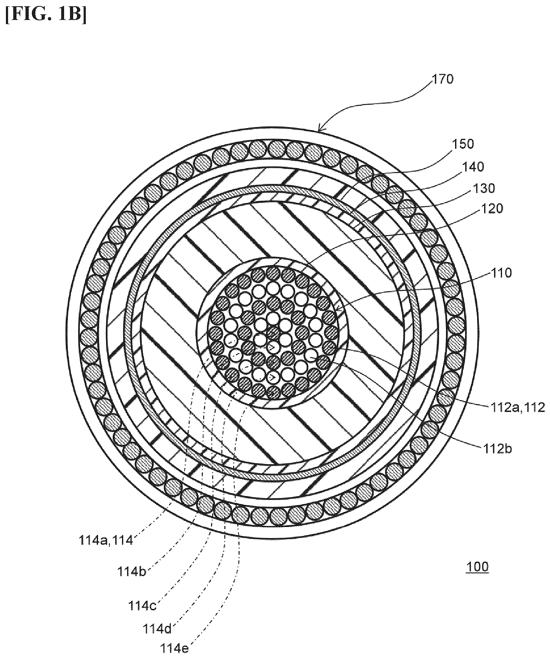

A power cable 100 and conductor 110 according to a first embodiment of the present disclosure will be described with reference to FIG. 1A or FIG. 1B.

In each cross-sectional view perpendicular to the axial direction of the conductor 110 of the present disclosure, a copper wire 112a described below is hatched with oblique lines, and an aluminum wire 112b is not hatched.

In the following, the "axial direction" of the power cable 100 refers to the direction along the central axis of the power cable 100. The "radial direction" of the power cable 100 refers to the direction from the central axis of the power cable 100 toward the outer periphery. The "circumferential direction" of the power cable 100 refers to the direction along the outer periphery of the power cable 100. The same terms as those mentioned above for the power cable 100 may also be used for the conductor 110, segments 111, conductor strands 112, and a sleeve 200.

As illustrated in FIG. 1A or FIG. 1B, the power cable 100 is configured as a solid insulated cable that is a high-voltage power transmission cable.

The power cable 100 may be for AC or DC. In second to seventh embodiments described below, the power cable 100 may be for AC or DC, similarly to the first embodiment.

As a first example illustrated in FIG. 1A, the power cable 100 includes, for example, the conductor 110, an inner semiconductive layer 120, an insulating layer 130, an outer semiconductive layer 140, a water absorbing layer (not illustrated), a metal shielding layer 150, and a sheath 160, in this order from the central axis of the conductor 110 toward the outer periphery of the power cable 100. The metal shielding layer 150 is, for example, a metal cladding, or a wound layer of copper wire or copper tape.

As a second example illustrated in FIG. 1B, the power cable 100 is configured as an underwater cable (such as a submarine cable or an undersea cable), and includes the conductor 110, the inner semiconductive layer 120, the insulating layer 130, the outer semiconductive layer 140, the water absorbing layer (not illustrated), the metal shielding layer 150, and an outer peripheral structure 170, in this order from the central axis of the conductor 110 toward the outer periphery of the power cable 100. The outer peripheral structure 170 in the underwater cable includes, for example, a corrosion protection layer, a seat yarn layer, an iron wire exterior (armoring), and a yarn layer, from a region close to the conductor 110 toward the outer periphery. The metal shielding layer 150 in the underwater cable is, for example, a metal cladding.

In the following description, for the sake of simplicity, the outside of the metal shielding layer 150 may be described as the sheath 160.

(Conductor)

The conductor 110 includes, for example, a plurality of conductor strands 112. Each of the plurality of conductor strands 112 has a circular cross section, which makes it feasible to easily manufacture the conductor strands 112.

The conductor 110 has, for example, a plurality of wire layers 114. The plurality of wire layers 114 are, for example, stacked in the radial direction of the conductor 110. The plurality of wire layers 114 are, for example, arranged concentrically around the central axis of the conductor 110. In each wire layer 114 except for the center of the conductor 110, the plurality of conductor strands 112 are, for example, arranged to cover the outer periphery of the inner wire layer 114, and are twisted in a spiral shape along the outer periphery of the inner wire layer 114.

Here, the conductor 110 has, for example, five concentric wire layers 114. Hereinafter, the five wire layers 114 are named, from the central axis of the conductor 110 toward the outer periphery, as a first wire layer 114a, a second wire layer 114b, a third wire layer 114c, a fourth wire layer 114d, and a fifth wire layer 114e. The first wire layer 114a, the second wire layer 114b, the third wire layer 114c, the fourth wire layer 114d, and the fifth wire layer 114e include 1, 6, 12, 18, and 24 conductor strands 112, respectively.

In this embodiment, the conductor 110 includes, for example, both a copper wire 112a and a aluminum wire 112b. By including the aluminum wire 112b in the conductor 110 in this manner, the weight of the power cable 100 can be reduced, and the manufacturing cost of the power cable 100 can be reduced.

The copper wire 112a contains, for example, copper or a copper alloy. The copper wire 112a is, for example, a soft copper wire. The copper wire 112a is a so-called bare wire and does not have an insulating film on its outer periphery.

The aluminum wire 112b includes, for example, aluminum or an aluminum alloy. The aluminum wire 112b has, for example, a aluminum native oxide film on its outer periphery. In other words, the aluminum wire 112b is not anodized. This makes it feasible to eliminate the need for special processing to form an oxide film on the aluminum wire 112b.

The thickness of the aluminum native oxide film in the aluminum wire 112b is thinner than the thickness of the oxide film formed by anodizing. Specifically, the thickness of the aluminum native oxide film in the aluminum wire 112b is, for example, 0.1 nm or more and 100 nm or less. In the present disclosure below, unless otherwise specified, the term "oxide film" simply described for the aluminum wire 112b means native oxide film.

In this embodiment, for example, at least a part of the copper wire 112a and at least a part of the aluminum wire 112b are in contact with each other. As a result, in a cable connection structure 20 (a connection portion between a conductor 110 and another conductor 110) described later, when the sleeve 200 is compressed, the copper wire 112a, which is harder than the aluminum wire 112b, can break at least a part of the oxide film of the aluminum wire 112b. As a result, even with a simple compression, the conduction between the pair of conductors 110 can be ensured.

On the other hand, in the portion other than the cable connection structure 20 (the non-connection portion between the conductor 110 and another conductor 110), the aluminum wire 112b is not compressed by the copper wire 112a. Therefore, the oxide film of the aluminum wire 112b is not broken, and the insulating property of the oxide film is maintained.

In this embodiment, the copper wires 112a and the aluminum wires 112b are, for example, arranged alternately in at least a portion of the conductor 110. This makes it feasible to suppress the skin effect in at least a portion of the conductor 110 by utilizing the oxide film of the aluminum wires 112b.

In this embodiment, the copper wire 112a and the aluminum wire 112b are each provided in at least two of the wire layers 114. By providing the copper wire 112a in at least two wire layers 114, the resistance and mechanical strength required for the conductor 110 can be obtained. By providing the aluminum wire 112b in at least two wire layers 114, the weight of the power cable 100 can be reduced, and the manufacturing cost of the power cable 100 can be reduced.

In this embodiment, the proportion of the number of copper wires 112a in the outermost periphery of the conductor 110 is, for example, 20 % or more of the total number of copper wires 112a plus the aluminum wires 112b in the outermost periphery of the conductor 110. This makes it easy to ensure conduction between the sleeve 200 described below and the copper wire 112a in the outermost periphery of the conductor 110. Furthermore, the copper wire 112a in the outermost periphery of the conductor 110 can break the aluminum oxide film in the inner aluminum wire 112b.

In this embodiment, the conductor 110 has, for example, a copper wire layer including only the copper wire 112a and an aluminum wire layer including only the aluminum wire 112b as the wire layer 114. The copper wire layer and the aluminum wire layer are alternately arranged in the radial direction of the conductor 110.

Specifically, the first wire layer 114a, the second wire layer 114b, the third wire layer 114c, the fourth wire layer 114d, and the fifth wire layer 114e are the copper wire layer, the aluminum wire layer, the copper wire layer, the aluminum wire layer, and the copper wire layer, respectively.

The above-described arrangement can reduce eddy currents that cross between the wire layers 114. As a result, it is feasible to suppress the skin effect.

In this embodiment, the outermost wire layer 114 is, for example, the copper wire layer as described above. That is, the proportion of the number of copper wires 112a in the fifth wire layer 114e of the outermost periphery is 100 %. By making the copper wire layer in which no oxide film is generated the outermost wire layer 114 in this way, the conduction between the sleeve 200 described later and the outermost copper wire layer, and the conduction between the outermost copper wire layer and the inner aluminum wire layer can be stably ensured.

However, the outermost periphery of the conductor 110 may have the aluminum wire 112b, and the number of this aluminum wire may be at least one. This allows at least one aluminum wire 112b to suppress direct contact between the copper wires 112a in the outermost periphery of the conductor 110. As a result, the skin effect in the AC can be stably suppressed.

In this embodiment, a so-called water propagation suppression layer that suppresses water propagation may be provided between adjacent wire layers 114. The water propagation suppression layer is formed of, for example, a water-running prevention tape. This makes it feasible to suppress water propagation along the axial direction of the conductor 110.

However, since the water-running prevention tape serving as the water-propagation suppression layer is insulating, adjacent wire layers sandwiching the water-running prevention tape are insulated from each other.

In contrast, in this embodiment, the water propagation suppression layer between adjacent wire layers 114 is removed at the connection portion between the conductor 110 and another conductor 110. By not providing a water propagation suppression layer at the connection portion between the conductor 110 and another conductor 110 in this way, the copper wire layer can be pressed against the adjacent aluminum wire layer in the cable connection structure 20, and the oxide film of the aluminum wire 112b in the aluminum wire layer can be broken. This ensures conduction between the adjacent wire layers 114.

(Coefficient ks specified in IEC60287 1-1)

In this embodiment, as described above, the insulating properties of the oxide film of the aluminum wire 112b are maintained in parts other than the cable connection structure 20, thereby making it feasible to suppress the skin effect compared to a conductor that includes only copper wire as a bare wire.

Here, the International Electrotechnical Commission IEC60287 1-1 (Edition 2.0) specifies a coefficient ks as an index indicating the tendency of the skin effect. The coefficient ks corresponds to the segmental conductor coefficient KS1 specified in the Japanese Cable Makers' Association Standard JCS0501.

The coefficient ks is calculated in accordance with IEC60287 1-1 (Edition 2.0 2014-11) as follows.

The AC resistance per unit length of a conductor at the maximum operating temperature, except for pipe-type cables, is given by the following formula (1).

$$R = R'(1 + ys + yp)...(1)$$

Here, R is the AC resistance of the conductor at the maximum operating temperature, in units of $\Omega$/m. R' is the DC resistance of the conductor at the maximum operating temperature, in units of $\Omega$/m. ys is the skin effect factor. yp is the proximity effect factor.

The DC resistance per unit length of the conductor at the maximum operating temperature is given by the following formula (2).

$$R' = R0\{1 + \alpha20(\theta - 20)\}...(2)$$

Here, R0 is the DC resistance of the conductor at 20°C in units of $\Omega$/m. $\alpha20$ is the constant mass temperature coefficient at 20°C. $\theta$ is the maximum operating temperature (°C).

The skin effect coefficient ys is given by the following formula (3).

[Formula 1]

$$ys = \frac{xs^4}{192 + 0.8xs^4} \quad \cdots (3)$$

Here, xs is given by the following formula (4) using the coefficient ks.

[Formula 2]

$$xs^2 = \frac{8\pi f}{R'} 10^{-7} ks \quad \cdots (4)$$

f is the frequency (Hz). Although the formula (3) is an approximation, it is accurate as long as xs does not exceed 2.8, and therefore is applicable in many practical cases.

The proximity effect coefficient yp is given by the following formula (5).

[Formula 3]

$$yp = \frac{xp^4}{192 + 0.8xp^4}\left(\frac{dc}{S}\right)^2 \left\{0.312\left(\frac{dc}{S}\right)^2 + \frac{1.18}{\frac{xp^4}{192 + 0.8xp^4} + 0.27}\right\} \quad \cdots (5)$$

Here, xp is given by the following formula (6) using the coefficient kp.

[Formula 4]

$$xp^2 = \frac{8\pi f}{R'} 10^{-7} kp \quad \cdots (6)$$

dc is the diameter of the conductor (mm). S is the distance between the central axes of the conductors (mm). Although the formula (5) is an approximation, it is accurate as long as xp does not exceed 2.8, and therefore is applicable in many practical cases.

The coefficient ks is determined based on the above formulas (1) to (6).

Here, Table 2 of the International Electrotechnical Commission IEC60287-1-1 (Edition 2.0 2014-11 revised version) states that the coefficient ks for a conductor in which all wires are copper wires as bare wires (hereinafter also referred to as an "all-bare copper wire conductor") is 0.62. Table 2 also states that the coefficient ks for a conductor in which all wires are aluminum wires with an oxide film (hereinafter also referred to as an "all aluminum wire conductor") is 0.25.

In contrast, in the present embodiment, the conductor 110 includes the copper wire 112a as bare wires and the aluminum wire 112b, and the copper wire 112a and the aluminum wire 112b are arranged as described above, thereby suppressing the skin effect.

As a result, in this embodiment, the coefficient ks of the conductor 110 obtained in accordance with the above IEC60287 1-1 (Edition 2.0 2014-11) is smaller than the coefficient ks of the all-bare copper wire conductor, for example. Note that the coefficient ks of the conductor 110 of this embodiment is, for example, larger than the coefficient ks of the all aluminum wire conductor, or is as close as possible to the coefficient ks of the all aluminum wire conductor.

That is, the coefficient ks of the conductor 110 of this embodiment is, for example, 0.25 or more and less than 0.62. As a result, even when the conductor 110 includes the copper wire 112a, it is feasible to realize a low AC resistance close to the AC resistance of the all insulated wires conductor (the all aluminum wire conductor).

(2) Connected power cable and cable connection structure

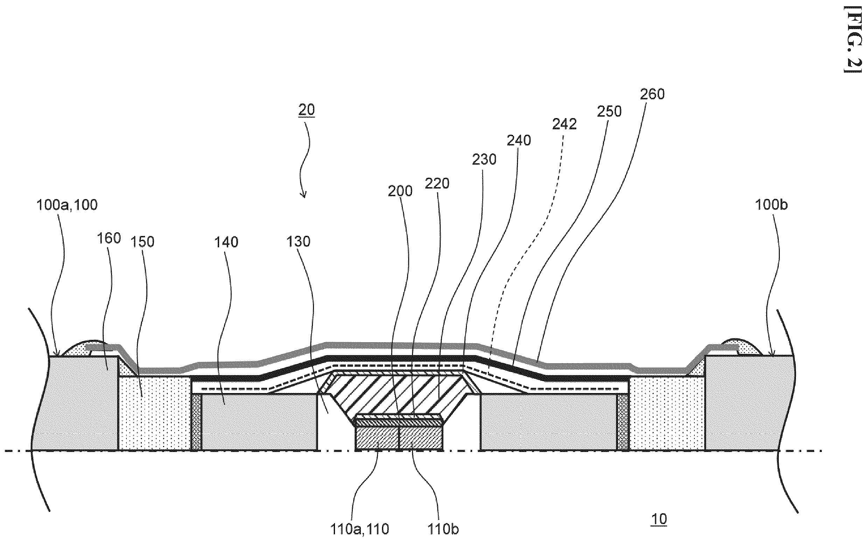

A schematic configurations of a connected power cable 10 and a cable connection structure 20 according to one embodiment of the present disclosure will be described with reference to FIG. 2.

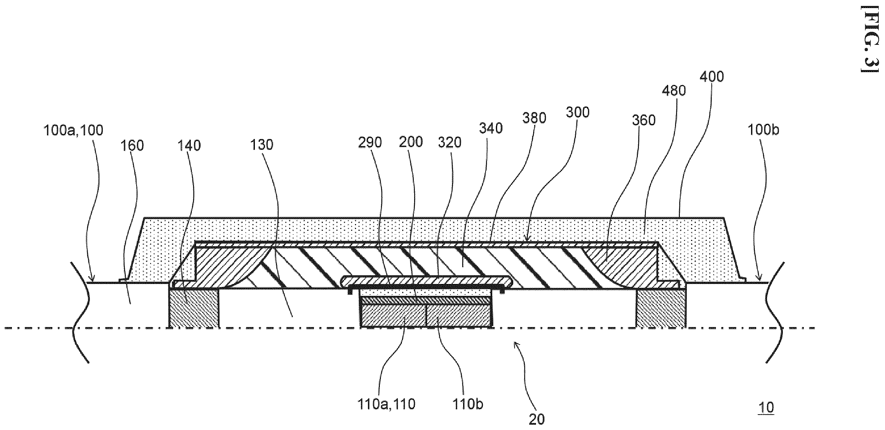

In FIG. 2 and later-described FIG. 3, the portions of the power cable 100 other than the conductor 110 are illustrated as sides peeled off in stages. Also, the lower side of each of FIG. 2 and later-described FIG. 3 is omitted.

As illustrated in FIG. 2, a connected power cable 10 of this embodiment includes, for example, a plurality of power cables 100 and at least one cable connection structure 20.

<Cable Connection Structure>

As illustrated in FIG. 2, the cable connection structure 20 is configured to connect, for example, a pair of power cables 100, and is configured as a so-called factory joint. Specifically, the cable connection structure 20 includes, for example, a first power cable 100a, a second power cable 100b, the sleeve 200, an inner semiconductive layer 220, an insulating layer 230, an outer semiconductive layer 240, a water-absorbent tape layer 242, a metal tube (protective tube) 250, and an anticorrosive layer (connection portion sheath) 260.

(Power cable)

The first power cable 100a and the second power cable 100b have the first conductor 110a and the second conductor 110b, respectively. As described above, each of the first conductor 110a and the second conductor 110b includes both the copper wire 112a and the aluminum wire 112b.

(Sleeve (conductor connection tube))

The sleeve 200 is provided, for example, to surround a connection point (connection portion, connection location) that connects the conductors 110 of a pair of power cables 100. Note that the sleeve 200 being tubular may have a partition wall (not illustrated) between the pair of conductors 110 in a hollow portion.

The sleeve 200 is, for example, configured as a tubular metal tube having a hollow portion (reference sign not illustrated). Into the hollow portion of the sleeve 200, an exposed portion of the pair of the conductor 110 including the connection portion is inserted.

Examples of metals that form the sleeve 200 include copper (pure copper), copper alloys, aluminum, and aluminum alloys. When the sleeve 200 is made of aluminum or an aluminum alloy, it is preferable to increase the thickness of the sleeve 200 so that the electrical resistance per cross-sectional area is equivalent to that of pure copper.

The sleeve 200 is compressed, for example, in the radial direction of the conductor 110. The sleeve 200 is compressed, for example, to have a cross-sectional shape that is centrally symmetrical with respect to the central axis of the sleeve 200. The shape of a cross section perpendicular to the axial direction of the sleeve 200 after compression is, for example, a polygon (hexagon) or a circle. Note that the sleeve 200 does not have a locally recessed indent in the radial direction of the sleeve 200. By compressing the sleeve 200 in this manner, the pair of conductors 110 are connected.

In this embodiment, the sleeve 200 is compressed so that, for example, the copper wire 112a breaks at least a part of the oxide film of the aluminum wire 112b. This makes it feasible to ensure the necessary electrical conductivity in the cable connection structure 20.

In an all aluminum wire conductor in which all wires are aluminum wires having an oxide film, the sleeve needs to be compressed with a pressure (stress) of about 100 MPa to break the aluminum oxide film. In this case, when the sleeve is compressed, the aluminum wire is significantly deformed, and there is a risk of the aluminum wire breaking.

In contrast, in this embodiment, as described above, the copper wire 112a is disposed around the aluminum wire 112b. The Young's modulus of copper is 130 GPa, and the Young's modulus of aluminum is 70 GPa. Therefore, copper is less likely to deform than aluminum. As a result, even when the sleeve 200 is compressed with a pressure of less than 100 MPa, the copper wire 112a can break at least a part of the oxide film of the aluminum wire 112b. In addition, a pressure of 80 MPa or more is desirable to obtain good contact. Furthermore, the deformation of the aluminum wire 112b can be suppressed, and the breakage of the aluminum wire 112b can be prevented. As a result, the conduction between the pair of conductors 110 can be stably secured.

In this embodiment, the axial length of the sleeve 200 (compression length of the sleeve 200) on each of the first conductor 110a and the second conductor 110b (i.e., on one side) is not particularly limited, and may be, for example, 50 mm or more and 200 mm or less.

(Configuration outside of sleeve)

The inner semiconductive layer 220, the insulating layer 230, the outer semiconductive layer 240, the outer semiconductive layer 240, the water-absorbent tape layer 242, the metal tube 250 and the anticorrosive layer 260 are provided in this order from the region closest to the sleeve 200 toward the outside, to cover the outer periphery of the sleeve 200. These can be configured as described in, for example, Japanese Unexamined Patent Application Publication No. 2023-065809 as a general configuration of a factory joint.

(3) Summary of this embodiment

According to this embodiment, one or more of the following advantages are achieved.
(a) In this embodiment, the conductor 110 includes both the copper wire 112a and the aluminum wire 112b. This makes it feasible to make the resistance of the conductor 110 equivalent to the resistance of a conductor including only the copper wire without excessively increasing the size of the conductor 110. Furthermore, it is feasible to suppress a decrease in the mechanical strength of the conductor 110 caused by the conductor 110 including the aluminum wire 112b.

(b) In this embodiment, at least a part of the copper wire 112a and at least a part of the aluminum wire 112b are in contact with each other. Thereby, in the cable connection structure 20, when the sleeve 200 is compressed, the copper wire 112a, which is harder than the aluminum wire 112b, can break at least a part of the oxide film of the aluminum wire 112b. As a result, even with a simple compression of the sleeve 200, the conduction between the pair of conductors 110 can be ensured. In this manner, according to this embodiment, the power cable 100 in which the conductor 110 includes the aluminum wire 112b can be easily and stably connected.

(c) In this embodiment, even when the sleeve 200 is compressed at a low pressure, the conduction between the pair of conductors 110 can be easily ensured. This makes it feasible to suppress breakage of the aluminum wire 112b in the sleeve 200 caused by strong compression of the sleeve 200. As a result, the mechanical strength of the cable connection structure 20 can be ensured, and it becomes feasible to suppress a decrease in the tensile tension of the conductor 110. For example, this embodiment can be applied to cases where a large tension is applied to the connection portion of the conductor 110, such as deep sea installation.

(d) In this embodiment, the conduction between the pair of conductors 110 including the aluminum wire 112b can be stably ensured without excessively increasing the axial length of the sleeve 200. This makes it feasible to prevent the overall length of the cable connection structure 20 from increasing. As a result, it is feasible to reduce the connection resistance of the cable connection structure 20 while suppressing the above-described decrease in the tensile tension of the conductor 110, without excessively increasing the axial length of the sleeve 200.

(e) In this embodiment, it is feasible to eliminate the need for welding each aluminum wire 112b between the pair of conductors 110. This makes it feasible to eliminate the need for special skills required for welding. In addition, compared to the welding method, it is feasible to shorten the work time and reduce the cost of the work.

(f) In this embodiment, the copper wires 112a and the aluminum wires 112b are alternately arranged in at least a part of the conductor 110. Thereby, in the part where the copper wire 112a as a bare wire is sandwiched between the aluminum wires 112b, the copper wire 112a as a bare wire can be confined by utilizing the oxide film of the aluminum wire 112b. As a result, even when the conductor 110 includes the copper wire 112a as a bare wire, the skin effect can be suppressed in at least a part of the conductor 110.

(g) In this embodiment, the copper wire 112a and the aluminum wire 112b are alternately arranged in at least a part of the conductor 110, so that the number of conductive points where the copper wire 112a breaks at least a part of the oxide film of the aluminum wire 112b can be increased in the compressed sleeve 200. This makes it feasible to reduce the electrical resistance at the connection portion of the pair of conductors 110. As a result, it becomes feasible to suppress abnormal heat generation at the connection portion of the pair of conductors 110.

(h) In this embodiment, at the connection portion between the conductor 110 and another conductor 110, the native oxide film of the aluminum wire 112b is broken by the copper wire 112a. On the other hand, at the non-connection portion between the conductor 110 and another conductor 110, the native oxide film of the aluminum wire 112b is not broken. That is, at the non-connection portion between the conductor 110 and another conductor 110, the native oxide film of the aluminum wire 112b is selectively maintained and utilized to suppress the skin effect. With this configuration, it is feasible to achieve both stable connection of the power cable 100 and suppression of the skin effect in AC.

(i) In this embodiment, the conductor 110 has a copper wire layer including only the copper wire 112a and an aluminum wire layer including only the aluminum wire 112b as the wire layer 114. The copper wire layer and the aluminum wire layer are alternately arranged in the radial direction of the conductor 110.

With the above-described arrangement, the copper wire layer can be confined by utilizing the oxide film of the aluminum wire 112b in the portion where the copper wire layer is sandwiched between the pair of aluminum wire layers. This reduces eddy currents crossing between the wire layers 114. As a result, even when the conductor 110 includes the copper wire 112a as a bare wire, it is feasible to suppress the skin effect.

With the above-described arrangement, in the cable connection structure 20, the sleeve 200 is compressed in the radial direction, so that the copper wire layer can be reliably pressed against the aluminum wire layer. This allows the copper wire 112a in the copper wire layer to break at least a part of the oxide film of the aluminum wire 112b in the aluminum wire layer. As a result, it is feasible to stably ensure conduction in the radial direction (i.e., the compressing direction) of the sleeve 200.

By arranging as described above, the conductor strands 112 having the same composition are continuously arranged in the same wire layer 114. This makes it feasible to easily manufacture the conductor 110.

(j) In this embodiment, the copper wires 112a having no oxide film are arranged continuously in the circumferential direction of the copper wire layer. That is, in the same copper wire layer, the copper wires 112a are conductive to each other. From this point of view, it can be said that the power cable 100 of this embodiment is more suitable for DC than other embodiments described later.

(4) Modifications of the first embodiment

The above-described embodiment can be modified as necessary as in the following modifications. Hereinafter, only elements different from the above-described embodiment will be described, and elements substantially the same as those described in the above-described embodiment will be given the same reference numerals and their description will be omitted. In the second to seventh embodiments described later, the description will be omitted as in the modifications of the first embodiment.

In following modifications 1 and 2, the cable connection structure is different from the above embodiment.

<Modification 1>

As illustrated in FIG. 3, the cable connection structure 20 of modification 1 has, for example, the first power cable 100a, the second power cable 100b, the sleeve 200, a sleeve cover 290, an insulating unit (rubber connection tube, rubber unit, insulating tube) 300, a protective tube (metal tube) 400, and a filler 480.

The first power cable 100a and the second power cable 100b of modification 1 are each configured similarly to those of the first embodiment described above.

The sleeve 200 is compressed so that the copper wire 112a breaks at least a part of the oxide film of the aluminum wire 112b, similarly to the first embodiment described above. The tubular sleeve cover 290 may be provided to surround the outer periphery of the sleeve 200.

The insulating unit 300 is configured, for example, as an insulating tubular member, and is provided to cover the outer periphery of the sleeve 200 (the outer periphery of the sleeve cover 290) and a portion of the outer periphery of each of the pair of power cables 100.

The insulating unit 300 is configured as, for example, a so-called cold shrink type (normal temperature shrinking type). That is, the insulating unit 300 has an elastic material (rubber) molded as an integral unit, and is configured to elastically shrink at room temperature to come into close contact with the connection portion of the power cable 100.

The insulating unit 300 includes, for example, an inner semiconductive layer 320, an insulating layer 340, a stress cone portion 360, and an outer semiconductive layer 380.

The metallic protective tube 400 is configured to cover the outer periphery of the insulating unit 300 and a portion of the outer periphery of each of the pair of power cables 100 to protect them.

The filler 480 is filled between the insulating unit 300 and the protective tube 400 within the protective tube 400. Examples of the filler 480 include a so-called waterproof mixture.

(Summary of modification 1)

According to modification 1, even with the cable connection structure 20 using the insulating unit 300, the same effect as that of the above-described first embodiment can be obtained.

<Modification 2>

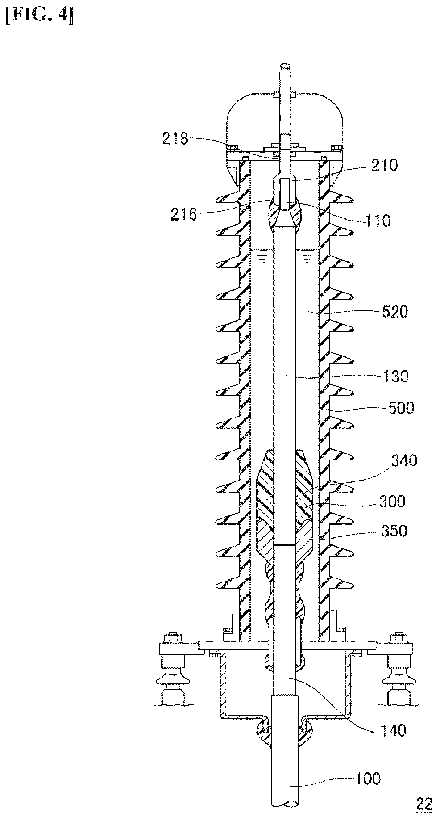

As illustrated in FIG. 4, a cable termination connection structure 22 of modification 2 is configured to terminate and connect the power cable 100, for example. Specifically, the cable termination connection structure 22 has, for example, the power cable 100, the sleeve 200, a metal strip 214, the insulating unit 300, and a porcelain tube 500.

The power cable 100 of the modification 2 is configured similarly to the power cable 100 of the first embodiment described above.

The sleeve 200 has, for example, a tubular portion 216 and a rod-shaped portion 218. The exposed portion of the conductor 110 of the power cable 100 is inserted into the tubular portion 216, and the tubular portion 216 is compressed so that the copper wire 112a breaks at least a part of the oxide film of the aluminum wire 112b. The rod-shaped portion 218 is provided on the opposite side of the tubular portion 216.

The insulating unit 300 includes, for example, the insulating layer 340 and a semiconductive layer 350. The semiconductive layer 350 forms a so-called stress cone.

The porcelain tube 500 is configured to be tubular so that, for example, the power cable 100 to which the sleeve 200 and the insulating unit 300 are attached is inserted. The porcelain tube 500 is erected in the vertical direction. The rod-shaped portion 218 of the sleeve 200 attached to the tip of the power cable 100 is fixed to the vertical upper end of the porcelain tube 500. On the other hand, the opening at the vertical lower end of the porcelain tube 500 is sealed. In this state, the porcelain tube 500 is filled with an insulating medium 520 such as insulating oil.

(Summary of modification 2)

According to modification 2, even with the cable termination connection structure 22, the same effect as that of the above-described first embodiment can be obtained.

<Second Embodiment of the Present Disclosure>

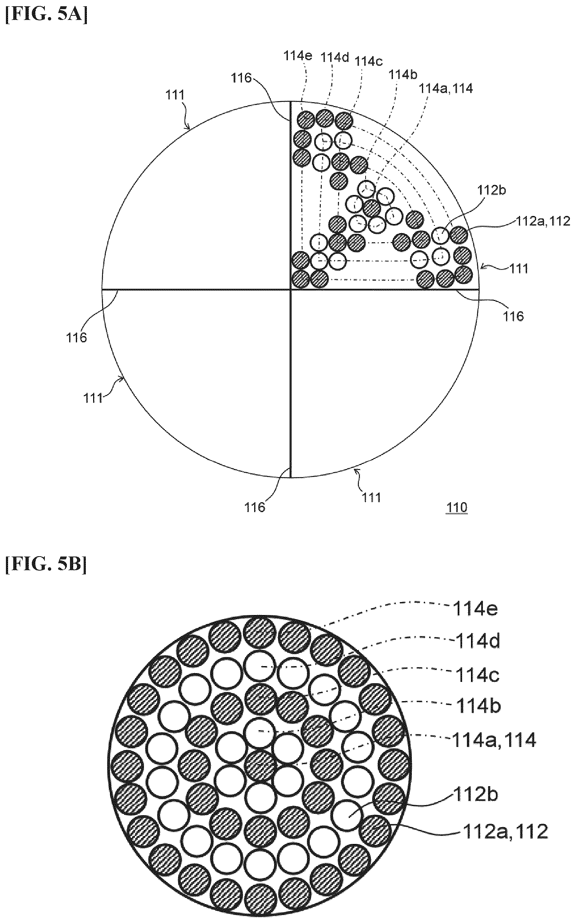

A second embodiment of the present disclosure will now be described with reference to FIGS. 5A and 5B.

In FIGS. 5A, and 6A and 7 to 10 described later, some of the conductor strands 112 are omitted. In each figure, the segments 111 that are not illustrated have the same configuration as the segments 111 that have been illustrated.

As illustrated in FIG. 5A, the conductor 110 of this embodiment is configured as a so-called segmental conductor. The conductor 110 has, for example, a plurality of segments 111 and insulating paper 116.

The segments 111 are provided around the central axis of the conductor 110. The segments 111 are arranged, for example, rotationally symmetrically around the central axis of the conductor 110. In this embodiment, the number of segments 111 is, for example, four. The four segments 111 are arranged in four-fold rotational symmetry around the central axis of the conductor 110.

The segment 111 includes, for example, a plurality of conductor strands 112 twisted together. The segment 111 is compressed from the state illustrated in FIG. 5B into a sector-shaped cross section as illustrated in FIG. 5A. The pressure applied when compressing the segment 111 is lower than the pressure applied when compressing the sleeve 200 in the above-described cable connection structure 20. Therefore, in the non-connection portion between the conductor 110 and another conductor 110, the native oxide film of the aluminum wire 112b in the segment 111 is not broken.

The segment 111 has, for example, a plurality of wire layers 114. The plurality of wire layers 114 are, for example, stacked in the radial direction of the segment 111. In each wire layer 114 except for the center of the segment 111, the plurality of conductor strands 112 are, for example, arranged to cover the outer periphery of the inner wire layer 114 and are twisted in a spiral shape along the outer periphery of the inner wire layer 114.

Each of the segments 111 has a circular arc region (reference sign not illustrated) that constitutes the outermost periphery of the conductor 110. In other words, the circular arc region corresponds to a region of the wire layer 114 of the outermost periphery that does not contact other segments 111.

In this embodiment, the segment 111 includes both the copper wire 112a and the aluminum wire 112b. At least a portion of the copper wire 112a and at least a portion of the aluminum wire 112b are in contact with each other in the segment 111. The copper wire 112a and the aluminum wire 112b are alternately arranged in at least a portion of the segment 111.

In this embodiment, in each segment 111, the copper wire 112a and the aluminum wire 112b are each provided in at least two of the wire layers 114.

In this embodiment, in the circular arc region of each of the segments 111, a proportion of the number of the copper wires 112a is, for example, 20 % or more of the total number of the copper wires 112a plus the aluminum wires 112b in that circular arc region. This makes it easy to ensure conduction between the sleeve 200 and the copper wires 112a of the outermost periphery of the segment 111. Furthermore, the copper wires 112a of the outermost periphery of the segment 111 can break the aluminum oxide film of the inner aluminum wires 112b.

In this embodiment, the segment 111 has, for example, a copper wire layer including only the copper wire 112a and an aluminum wire layer including only the aluminum wire 112b as the wire layer 114. The copper wire layer and the aluminum wire layer are alternately arranged in the radial direction of the segment 111.

Specifically, in the segment 111, for example, the first wire layer 114a, the second wire layer 114b, the third wire layer 114c, the fourth wire layer 114d, and the fifth wire layer 114e are the copper wire layer, the aluminum wire layer, the copper wire layer, the aluminum wire layer, and the copper wire layer, respectively. That is, the proportion of the number of copper wires 112a in the fifth wire layer 114e of the outermost periphery is 100 %.

Note that the circular arc region of each of the segments 111 may include the aluminum wire 112b and the number of this aluminum wire 112b may be at least one. With this configuration, at least one aluminum wire 112b can suppress direct contact between the copper wires 112a in the outermost periphery of the segment 111.

The insulating paper 116 is, for example, sandwiched between adjacent segments 111. In this way, the adjacent segments 111 are insulated from each other by the insulating paper 116. As a result, the effective surface area of the conductor 110 can be increased, and the skin effect can be suppressed.

The cross-sectional area of the conductor 110 is not particularly limited, but is, for example, 1000 mm$^2$ or more, or 2500 mm$^2$ or more.

(Summary of second embodiment)

According to this embodiment, by alternately arranging the copper wire 112a and the aluminum wire 112b in at least a part of the segment 111 of the conductor 110 as a segmental conductor, even when the cross-sectional area of the conductor 110 is increased in a state where the conductor 110 as a segmental conductor includes the copper wire 112a as a bare wire, the skin effect can be suppressed. As a result, it is feasible to reduce the AC resistance of the power cable 100 while increasing the capacity of the power cable 100.

<Third Embodiment of the Present Disclosure>

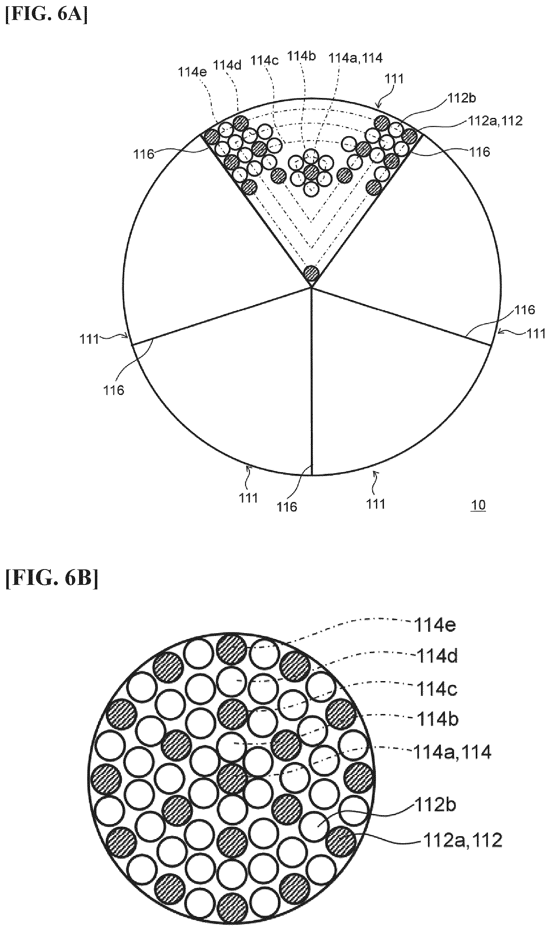

As illustrated in FIG. 6A, the conductor 110 of this embodiment is configured as a segmental conductor and has a plurality of segments 111 and insulating paper 116, similar to the second embodiment. However, the arrangement inside the conductor 110 of this embodiment is different from the arrangement in the second embodiment.

The segments 111 are compressed from the state illustrated in FIG. 6B into a sector-shaped cross section as illustrated in FIG. 6A. The number of segments 111 is, for example, five.

In this embodiment, in the circular arc region of each of the segments 111, a proportion of the number of the copper wires 112a is, for example, 20 % or more of the total number of the copper wires 112a plus the aluminum wires 112b in that circular arc region.

On the other hand, in this embodiment, in the circular arc region of each of the segments 111, a proportion of the number of the copper wires 112a to the total number of the copper wires 112a plus the aluminum wires 112b in that circular arc region may be, for example, 98 % or less, or 80 % or less, or 70 % or less. Thereby, in the outermost periphery of the conductor 110, the aluminum wire 112b can reduce the number of continuous copper wires 112a, and direct contact between the copper wires 112a can be suppressed. As a result, the increase in AC resistance caused by direct contact between the copper wires 112a in the outermost periphery of the conductor 110 can be suppressed.

In this embodiment, the copper wires 112a are arranged in a spotted pattern not to contact each other within the segment 111. Each copper wire 112a is surrounded by multiple aluminum wires 112b.

In this embodiment, the wire layers 114 constituting the segment 111 are classified into at least two types, for example. Specifically, the segment 111 has, for example, an aluminum wire layer and a composite wire layer. The aluminum wire layer includes, for example, only the aluminum wire 112b and not the copper wire 112a. On the other hand, the composite wire layer includes the copper wire 112a and the aluminum wire 112b. In the composite wire layer, for example, at least one copper wire 112a is interposed between the aluminum wires 112b adjacent to each other in the circumferential direction of the wire layer 114. In the composite wire layer of this embodiment, for example, the aluminum wire 112b and the copper wire 112a are alternately arranged in the circumferential direction of the wire layer 114. The aluminum wire layer and the composite wire layer are alternately arranged in the radial direction of the segment 111. When the second wire layer 114b is an aluminum wire layer, the first wire layer 114a may be a copper wire layer consisting of one copper wire 112a.

Specifically, within the segment 111, for example, the first wire layer 114a, the second wire layer 114b, the third wire layer 114c, the fourth wire layer 114d, and the fifth wire layer 114e are the copper wire layer, the aluminum wire layer, the composite wire layer, the aluminum wire layer, and the composite wire layer, respectively.

In this embodiment, due to the above-described arrangement, the copper wires 112a are arranged in a spotted pattern not to contact each other.

(Summary of third embodiment)

(a) According to this embodiment, in the segment 111 of the conductor 110 as a segmental conductor, the copper wires 112a are arranged in a spotted pattern not to contact each other, and thereby in each of the copper wires 112a surrounded by the aluminum wires 112b, the copper wires 112a as bare wires can be confined by utilizing the oxide film of the aluminum wires 112b. Thereby, even when the cross-sectional area of the conductor 110 is increased in a state in which the conductor 110 as a segmental conductor includes the copper wires 112a as bare wires, the skin effect can be stably suppressed. As a result, it is feasible to stably reduce the AC resistance of the power cable 100 while increasing the capacity of the power cable 100.

(b) In this embodiment, in the segment 111 of the conductor 110 as a segmental conductor, each copper wire 112a is surrounded by a plurality of aluminum wires 112b, so that the entire outer periphery of the copper wire 112a can break at least a part of the oxide film of the plurality of aluminum wires 112b in the compressed sleeve 200. This makes it feasible to reduce the electrical resistance at the connection portion of the pair of conductors 110 while increasing the number of aluminum wires 112b.

<Fourth Embodiment of the Present Disclosure>

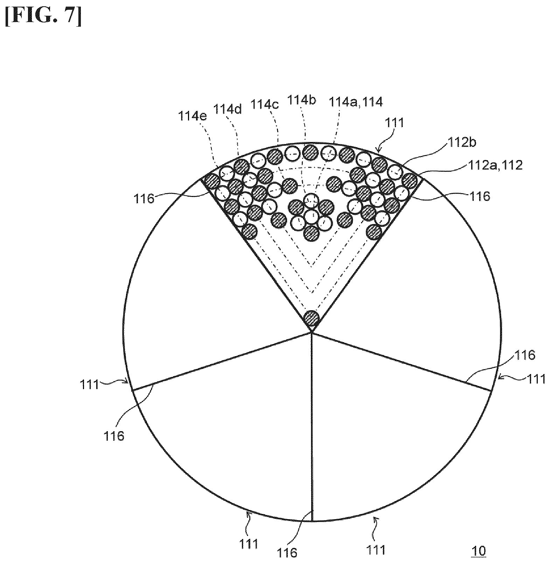

As illustrated in the FIG. 7, the conductor 110 of this embodiment is configured as a divided conductor and has a plurality of segments 111 and insulating paper 116, similar to the third embodiment. However, the arrangement inside the conductor 110 of this embodiment is different from the arrangement in the third embodiment.

In this embodiment, the copper wires 112a and the aluminum wires 112b are arranged in a spotted pattern.

Specifically, the segment 111 has, for example, a plurality of composite wire layers including the copper wire 112a and the aluminum wire 112b. The plurality of composite wire layers are stacked in the radial direction of the segment 111. In each of the plurality of composite wire layers, one copper wire 112a and one aluminum wire 112b are alternately arranged in the circumferential direction of each of the plurality of composite wire layers.

In this embodiment, in the circular arc region of each of the segments 111, a proportion of the number of the copper wires 112a is, for example, 40 % or more and 60 % or less of the total number of the copper wires 112a plus the aluminum wires 112b in that circular arc region.

(Summary of fourth embodiment)

(a) According to this embodiment, a plurality of copper wires 112a and a plurality of aluminum wires 112b are arranged in a spotted pattern. Between the plurality of copper wires 112a, the aluminum wire 112b having an oxide film is interposed. The plurality of copper wires 112a are not in direct contact with each other. This makes it feasible to stably suppress the skin effect in AC.

(b) According to this embodiment, the copper wires 112a and the aluminum wires 112b are evenly distributed in the conductor 110. In other words, the conductor strands 112 having the same composition are not locally concentrated. This allows the mechanical strength of the conductor 110 to be evenly distributed. As a result, the stress applied to the conductor 110 can be prevented from being locally concentrated.

<Fifth Embodiment of the Present Disclosure>

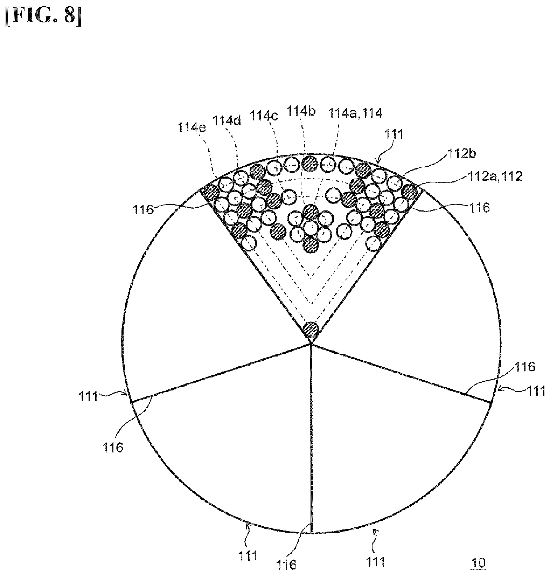

As illustrated in FIG. 8, the conductor 110 of this embodiment is configured as a divided conductor and has a plurality of segments 111 and insulating paper 116, similar to the fourth embodiment. However, the arrangement inside the conductor 110 of this embodiment is different from the arrangement in the fourth embodiment.

In this embodiment, the segment 111 has, for example, a plurality of composite wire layers including the copper wire 112a and the aluminum wire 112b. The plurality of composite wire layers are stacked in the radial direction of the segment 111. In each of the plurality of composite wire layers, a single one of copper wire 112a and a set constituted by two or more of aluminum wires 112b provided consecutively are alternately arranged in the circumferential direction of each of the plurality of composite wire layers. In this embodiment, two aluminum wires 112b are provided consecutively in each of the plurality of composite wire layers. Note that the first wire layer 114a located at the center of the segment 111 is either the copper wire 112a or the aluminum wire 112b.

In the circular arc region of each of the segments 111, a proportion of the number of the copper wires 112a is, for example, 30 % or more and 40 % or less of the total number of the copper wires 112a plus the aluminum wires 112b in that circular arc region.

(Summary of fifth embodiment)

(a) According to this embodiment, in each of the composite wire layers, two or more aluminum wires 112b having an oxide film are interposed between the copper wires 112a. This makes it feasible to stably suppress the skin effect in AC.

(b) According to this embodiment, it is feasible to increase the number of aluminum wires 112b in the conductor 110. This allows the power cable 100 to be lighter in weight, and the manufacturing cost of the power cable 100 to be reduced.

<Sixth Embodiment of the Present Disclosure>

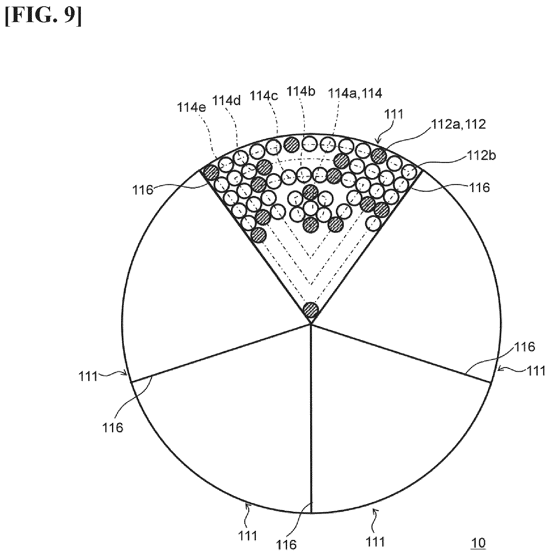

As illustrated in the FIG. 9, the conductor 110 of this embodiment is configured as a segmental conductor and has a plurality of segments 111 and insulating paper 116, similar to the fourth and fifth embodiments. However, the arrangement inside the conductor 110 of this embodiment is different from the arrangement in the fourth and fifth embodiments.

In this embodiment, in each of the plurality of composite wire layers, a single one of copper wire 112a and a set constituted by three or more of aluminum wires 112b provided consecutively are alternately arranged in the circumferential direction of each of the plurality of composite wire layers. In this embodiment, four aluminum wires 112b are provided consecutively in each of the composite wire layers,.

In addition, the number of aluminum wires interposed between a pair of copper wires 112a in a portion of each wire layer 114 may be less than that in the fifth wire layer 114e of the outermost periphery.

In the circular arc region of each of the segments 111, a proportion of the number of the copper wires 112a is, for example, 20 % or more and 30 % or less of the total number of the copper wires 112a plus the aluminum wires 112b in that circular arc region.

In this embodiment, with the above-described arrangement, the copper wires 112a may be arranged in a spotted pattern not to contact each other.

(Summary of sixth embodiment)

(a) According to this embodiment, the same effect as that of the fifth embodiment can be obtained.

(b) According to this embodiment, the number of aluminum wires 112b in the conductor 110 can be increased compared to that in the fifth embodiment. This allows the power cable 100 to be further lighter in weight, and the manufacturing cost of the power cable 100 can be further reduced.

<Seventh Embodiment of the Present Disclosure>

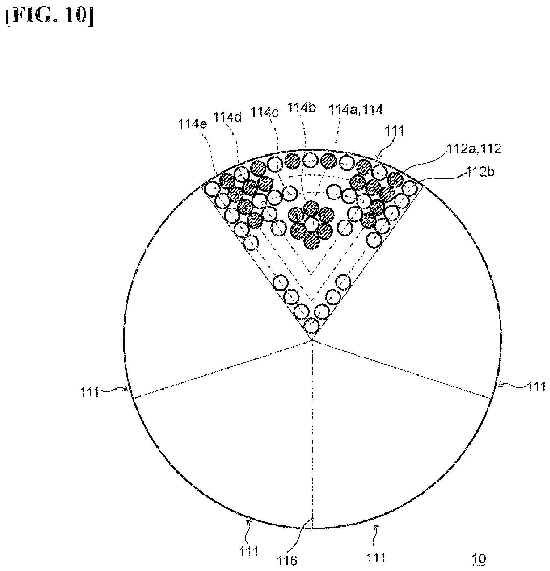

As illustrated in FIG. 10, the conductor 110 of this embodiment is configured as a segmental conductor and has a plurality of segments 111, similar to the third to sixth embodiments. However, the arrangement within the conductor 110 of this embodiment is different from the arrangement in the third to sixth embodiments. Furthermore, the conductor 110 of this embodiment does not have the insulating paper 116.

In this embodiment, from among the copper wire 112a and the aluminum wire 112b, only the aluminum wires 112b are disposed at a location where each one of the segments 111 contacts another one of the segments 111. As a result, no insulating paper 116 is provided between the segments 111.

Specifically, the segment 111 has, for example, a composite wire layer including the copper wire 112a and the aluminum wire 112b as the fifth wire layer 114e of the outermost periphery. only the aluminum wires 112b are continuously arranged at a location where the fifth wire layer 114e of the outermost periphery contacts another one of the segments 111.

On the other hand, at a location where the fifth wire layer 114e of the outermost periphery does not contact another one of the segments 111, the arrangement of the copper wire 112a and the aluminum wire 112b is not particularly limited. In this embodiment, at a location where the fifth wire layer 114e of the outermost periphery does not contact another one of the segments 111, for example, the aluminum wire 112b and the copper wire 112a are alternately arranged in the circumferential direction of the fifth wire layer 114e.

In this embodiment, in the circular arc region of each of the segments 111, a proportion of the number of the copper wires 112a is, for example, 20 % or more of the total number of the copper wires 112a plus the aluminum wires 112b in that circular arc region. In the example of the fifth wire layer 114e of this embodiment, the proportion of the number of the copper wires 112a in the circular arc region is, for example, 40 % or more and 60 % or less.

The wire layer 114 inside the fifth wire layer 114e of the outermost periphery is not particularly limited. In this embodiment, for example, the first wire layer 114a, the second wire layer 114b, the third wire layer 114c, and the fourth wire layer 114d are the aluminum wire layer, the copper wire layer, the aluminum wire layer, and the copper wire layer, respectively.

(Summary of seventh embodiment)

According to this embodiment, since only the aluminum wires 112b are disposed at a location where each one of the segments 111 contacts another one of the segments 111, the segments 111 can be insulated from each other without providing insulating paper 116 between the segments 111. As a result, the configuration of the conductor 110 can be simplified.

(Summary of all embodiments)

As described above, depending on the various properties required for the power cable 100, it is feasible to select any one of the first to seventh embodiments described above, or to combine at least two of the first to seventh embodiments.

<Other Embodiments of the Present Disclosure>

Although the present disclosure has been specifically described above with respect to the embodiments, the present disclosure is not limited to the above-described embodiments, and various modifications can be made without departing from the gist of the present disclosure.

In the above-described first embodiment and modification 1, the first conductor 110a and the second conductor 110b in the cable connection structure 20 each include both the copper wire 112a and the aluminum wire 112b, but the present disclosure is not limited to this case. It is sufficient that at least the first conductor 110a includes both the copper wire 112a and the aluminum wire 112b. In this case, the second conductor 110b may include only the copper wire 112a.

In the above-described first embodiment and modification 1, the connected power cable 10 has one cable connection structure 20. However, the connected power cable 10 may have a plurality of cable connection structures 20.

In the above embodiment, the application of the compound is not mentioned, but the application of the compound in the present disclosure is not limited. For example, a compound containing metal particles may be provided between the inner circumferential surface of the sleeve 200 and the outer circumferential surface of the conductor 110. This allows the electrical resistance to be stably reduced. On the other hand, there may be no compound between the inner circumferential surface of the sleeve 200 and the outer circumferential surface of the conductor 110. This prevents the resin component or oil component in the compound from evaporating even when the connected power cable 10 becomes hot.

Although the cable connection structure was not described in the second to seventh embodiments described above, the power cable 100 of the second to seventh embodiments can be applied to a cable connection structure 20 similar to that of the first embodiment, a cable connection structure 20 similar to that of modification 1, or a cable termination connection structure 22 similar to that of modification 2.

In the above-described second to seventh embodiments, a case has been described in which the conductor 110 is a segmental conductor having a plurality of segments 111, but the above-described second to seventh embodiments may also be applied to a conductor 110 configured as a circular conductor having a circular cross section.

In all of the above-described embodiments, the total number of conductor strands 112, the number of segments 111, the number of conductor strands 112 in each wire layer 114, and the number of wire layers 114 may be modified as appropriate.

**[Reference Signs List]**

10 Connected power cable
20 Cable connection structure
22 Cable termination connection structure
100 Power cable

| 100a | First power cable |
|---|---|
| 100b | Second power cable |
| 110 | Conductor |
| 110a | First conductor |
| 110b | Second conductor |
| 111 | Segment |
| 112 | Conductor strand |
| 112a | Copper wire |
| 112b | Aluminum wire |
| 114 | Wire layer |
| 114a | First wire layer |
| 114b | Second wire layer |
| 114c | Third wire layer |
| 114d | Fourth wire layer |
| 114e | Fifth wire layer |
| 116 | Insulating paper |
| 120 | Inner semiconductive layer |
| 130 | Insulating layer |
| 140 | Outer semiconductive layer |
| 150 | Metal shielding layer |
| 160 | Sheath |
| 170 | Outer structure |
| 200 | Sleeve |
| 214 | Metal strip |
| 216 | Tubular section |
| 218 | Rod section |
| 220 | Inner semiconductive layer |
| 230 | Insulating layer |
| 240 | Outer semiconductive layer |
| 242 | Water-absorbent tape layer |
| 250 | Metal tube |
| 260 | Anticorrosive layer |
| 290 | Sleeve cover |
| 300 | Insulating unit |
| 320 | Inner semiconductive layer |
| 340 | Insulating layer |
| 350 | Semiconductive layer |
| 360 | Stress cone section |
| 380 | Outer semiconductive layer |
| 400 | Protective tube |
| 480 | Filling material |
| 500 | Porcelain tube |
| 520 | Insulating medium |

## Claims

1. A power cable comprising a conductor comprising a copper wire containing copper or a copper alloy and an aluminum wire containing aluminum or an aluminum alloy, wherein
at least a portion of the copper wire and at least a portion of the aluminum wire are in contact with each other.

2. The power cable according to claim 1,
wherein the copper wire and the aluminum wire are arranged alternately in at least a portion of the conductor.

3. The power cable according to claim 1 or 2,
wherein

   the conductor comprises a plurality of wire layers including at least one from among the copper wire and the aluminum wire, and

each of the copper wire and the aluminum wire is provided in at least two of the wire layers.

4. The power cable according to any one of claims 1 to 3,
wherein a proportion of the number of the copper wire in an outermost periphery of the conductor is 20 % or more of the total number of the copper wire plus the aluminum wire in the outermost periphery of the conductor.

5. The power cable according to claim 4,
wherein the outermost periphery of the conductor includes the aluminum wire, and the number of this aluminum wire is at least one.

6. The power cable according to any one of claims 1 to 3,
wherein

the conductor comprises a plurality of segments including the copper wire and the aluminum wire,
each of the segments includes a circular arc region that constitutes an outermost periphery of the conductor, and in the circular arc region of each of the segments, a proportion of the number of the copper wire is 20 % or more of the total number of the copper wire plus the aluminum wire in that circular arc region.

7. The power cable according to claim 6,
wherein the circular arc region of each of the segments includes the aluminum wire, and the number of this aluminum wire is at least one.

8. The power cable according to any one of claims 1 to 4,
wherein
the conductor comprises:

a copper wire layer including only the copper wire; and
an aluminum wire layer including only the aluminum wire, and
the copper wire layer and the aluminum wire layer are alternately arranged in a radial direction of the conductor.

9. The power cable according to any one of claims 1 to 3 and 6,
wherein

the conductor comprises a plurality of segments including the copper wire and the aluminum wire,
each of the segments comprises:

a copper wire layer including only the copper wire; and
an aluminum wire layer including only the aluminum wire, and
the copper wire layer and the aluminum wire layer are alternately arranged in a radial direction of each of the segments.

10. The power cable according to any one of claims 1 to 7,
wherein

a plurality of the copper wires are provided,
a plurality of the aluminum wires are provided, and
the copper wires and the aluminum wires are arranged in a spotted pattern.

11. The power cable according to any one of claims 1 to 3, 6, and 7,
wherein

the conductor comprises a plurality of segments including the copper wire and the aluminum wire,
each of the segments comprises:

an aluminum wire layer including only the aluminum wire and not the copper wire; and
a composite wire layer including the copper wire and the aluminum wire, and
the aluminum wire layer and the composite wire layer are alternately arranged in a radial direction of each of the segments.

12. The power cable according to any one of claims 1 to 3, 6, and 7, wherein

the conductor comprises a plurality of composite wire layers including the copper wire and the aluminum wire, and in each of the composite wire layers, a single one of the copper wire and a set constituted by two or more of the aluminum wires provided consecutively are alternately arranged in a circumferential direction of each of the composite wire layers.

13. The power cable according to claim 11 or 12, wherein

a plurality of the copper wires are provided, a plurality of the aluminum wires are provided, and the copper wires are arranged in a spotted pattern not to contact each other.

14. The power cable according to any one of claims 1 to 3, 6, 7, and 11 to 13, wherein

the conductor comprises a plurality of segments including the copper wire and the aluminum wire, and from among the copper wire and the aluminum wire, only the aluminum wire is disposed at a location where each one of the segments contacts another one of the segments.

15. The power cable according to any one of claims 1 to 14, wherein the aluminum wire includes an aluminum native oxide film on the outer periphery of the aluminum wire.

16. The power cable according to claim 15, wherein

at a connection portion between the conductor and another conductor, the native oxide film of the aluminum wire is broken by the copper wire, and at a non-connection portion between the conductor and another conductor, the native oxide film of the aluminum wire is not broken.

17. A conductor used for the power cable according to any one of claims 1 to 16.

18. A cable connection structure comprising:

a first power cable having a first conductor; a second power cable having a second conductor; and a sleeve being tubular and connecting the first conductor and the second conductor, wherein at least the first conductor includes a copper wire containing copper or a copper alloy and an aluminum wire containing aluminum or an aluminum alloy, and within the first conductor, at least a portion of the copper wire and at least a portion of the aluminum wire are in contact with each other.

19. A cable termination connection structure comprising:

a power cable including a conductor; a sleeve being tubular and surrounding a tip of the conductor of the power cable; and a porcelain tube into which the power cable to which the sleeve is attached is inserted, wherein the conductor includes a copper wire containing copper or a copper alloy, and an aluminum wire containing aluminum or an aluminum alloy, and at least a portion of the copper wire and at least a portion of the aluminum wire are in contact with each other.

[FIG. 1A]

[FIG. 1B]

170

150

140

130

120

110

112a,112

112b

114a,114

114b

114c

114d

114e

100

[FIG. 2]

[FIG. 3]

[FIG. 4]

[FIG. 5A]

[FIG. 5B]

[FIG. 6A]

[FIG. 6B]

[FIG. 7]

[FIG. 8]

[FIG. 9]

[FIG. 10]

## INTERNATIONAL SEARCH REPORT

| International application No. |
| --- |
| **PCT/JP2024/036260** |

### A. CLASSIFICATION OF SUBJECT MATTER

*H01B 9/02*(2006.01)i
FI: H01B9/02

According to International Patent Classification (IPC) or to both national classification and IPC

### B. FIELDS SEARCHED

Minimum documentation searched (classification system followed by classification symbols)

H01B9/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2001-76537 A (HITACHI CABLE, LTD.) 23 March 2001 (2001-03-23) | 1-4, 6, 15, 17 |
| | paragraphs [0002]-[0003], [0011]-[0014], [0016], fig. 1-2 | |
| Y | | 18-19 |
| X | CN 213844776 U (TONGYONG (TIANJIN) ALUMINIUM ALLOY PRODUCTS CO., LTD.) 30 July 2021 (2021-07-30) | 1-2, 4, 8, 15, 17 |
| | paragraph [0051], fig. 1 | |
| Y | | 18-19 |
| X | JP 2017-183184 A (FUJIKURA LTD.) 05 October 2017 (2017-10-05) | 1-2, 4, 15-17 |
| | paragraphs [0003], [0019], [0022]-[0026], [0038], fig. 1-2 | |
| Y | | 18-19 |
| Y | JP 2014-39394 A (VISCAS CORP.) 27 February 2014 (2014-02-27) | 18 |
| | paragraphs [0032]-[0033], fig. 3 | |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 November 2024** | **07 January 2025** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/036260** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 53-118789 A (THE FURUKAWA ELECTRIC CO., LTD.) 17 October 1978 (1978-10-17) p. 1, lower left column, line 13 to lower right column, line 3, p. 2, upper left column, lines 3-12, fig. 2 | 19 |
| A | JP 2021-194609 A (THE CHUGOKU ELECTRIC POWER CO., INC.) 27 December 2021 (2021-12-27) entire text, all drawings | 1-19 |
| A | WO 2005/024851 A1 (SUMITOMO SEI STEEL WIRE CORP) 17 March 2005 (2005-03-17) entire text, all drawings | 1-19 |
| A | JP 2000-511338 A (ASEA BROWN BOVERI AB) 29 August 2000 (2000-08-29) entire text, all drawings | 1-19 |
| A | Microfilm of the specification and drawings annexed to the request of Japanese Utility Model Application No. 14843/1980 (Laid-open No. 115809/1981) (SUMITOMO ELECTRIC INDUSTRIES, LTD.) 05 September 1981 (1981-09-05), entire text, all drawings | 1-19 |
| A | JP 2019-207758 A (SUMITOMO ELECTRIC INDUSTRIES, LTD.) 05 December 2019 (2019-12-05) entire text, all drawings | 1-19 |

Form PCT/ISA/210 (second sheet) (July 2022)

## INTERNATIONAL SEARCH REPORT
### Information on patent family members

International application No.

**PCT/JP2024/036260**

| Patent document cited in search report | | | Publication date (day/month/year) | Patent family member(s) | Publication date (day/month/year) |
|---|---|---|---|---|---|
| JP | 2001-76537 | A | 23 March 2001 | (Family: none) | |
| CN | 213844776 | U | 30 July 2021 | (Family: none) | |
| JP | 2017-183184 | A | 05 October 2017 | (Family: none) | |
| JP | 2014-39394 | A | 27 February 2014 | (Family: none) | |
| JP | 53-118789 | A | 17 October 1978 | (Family: none) | |
| JP | 2021-194609 | A | 27 December 2021 | (Family: none) | |
| WO | 2005/024851 | A1 | 17 March 2005 | US 2007/0017691 A1<br>entire text, all drawings<br>CN 1846280 A | |
| JP | 2000-511338 | A | 29 August 2000 | US 6376775 B1<br>entire text, all drawings<br>WO 1997/045930 A1 | |
| JP | 56-115809 | U1 | 05 September 1981 | (Family: none) | |
| JP | 2019-207758 | A | 05 December 2019 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014128135 A
- JP 2023065809 A